# EUROPÄISCHE PATENTSCHRIFT

(11) **EP 2 552 778 B1**
(45) Veröffentlichungstag und Bekanntmachung des Hinweises auf die Patenterteilung: **30.04.2014**
(21) Anmeldenummer: 11711536.0
(22) Anmeldetag: 29.03.2011
(51) Int. Cl.: B64D 11/00

(54) **HANDHABUNGSSYSTEM ZUM HANDHABEN VON OBJEKTEN IN EINEM FAHRZEUG, FLUGZEUG UND VERFAHREN ZUM HANDHABEN VON OBJEKTEN IN EINEM FAHRZEUG**
HANDLING SYSTEM FOR HANDLING OBJECTS IN A VEHICLE, AIRCRAFT AND METHOD FOR HANDLING OBJECTS IN A VEHICLE
SYSTEME DE MANIPULATION POUR MANIPULER DES OBJETS DANS UN VEHICULE, AERONEF ET PROCEDE POUR MANIPULER DES OBJETS DANS UN VEHICULE

(30) Priorität: 29.03.2010 US 318613 P; 29.03.2010 DE 102010013219
(43) Veröffentlichungstag der Anmeldung: 06.02.2013
(73) Patentinhaber: Airbus Operations GmbH, 21129 Hamburg (DE)
(72) Erfinder: SCHLIWA, Ralf, 21739 Dollern (DE); DILMAGHANI, Homayoun, F-31530 Merenvielle (FR); POHL, Ulrich, 27777 Ganderkesee (DE); STEINBECK, Herbert, 21149 Hamburg (DE); STRASDAS, Maria, 21635 Jork (DE)
(74) Vertreter: Maiwald Patentanwalts GmbH
(86) Internationale Anmeldenummer: PCT/EP2011/054772
(87) Internationale Veröffentlichungsnummer: WO 2011/120944

(56) Entgegenhaltungen:
- DE-A1- 4 302 706
- DE-A1- 10 204 892
- GB-A- 2 131 779
- US-A- 5 314 143
- US-A- 6 152 287

## Beschreibung

Die vorliegende Anmeldung beansprucht die Priorität der US Provisional Patentanmeldung Nr. 61/318,613, eingereicht am 29. März 2010 und der deutschen Patentanmeldung Nr. 10 2010 013 219.5, eingereicht am 29. März 2010.

### TECHNISCHES GEBIET

Die Erfindung betrifft ein Handhabungssystem (Anspruch 1) zum Handhaben von Objekten in einem Fahrzeug, aufweisend eine außerhalb einer Fahrzeugkabine positionierbare Lagervorrichtung zum Lagern von Objekten, eine in einer Fahrzeugkabine positionierbare Zugriffsvorrichtung zum Entnehmen oder Einsetzen von Objekten und eine Transportvorrichtung zum Transportieren von Objekten zwischen der Lagervorrichtung und der Zugriffsvorrichtung.

Die Erfindung betrifft ferner ein Flugzeug mit mindestens einer Kabine und mindestens einem Handhabungssystem zum Handhaben (Anspruch 6) von Objekten.

Ferner betrifft die Erfindung ein Verfahren (Anspruch 4) zum Handhaben von Objekten in einem Fahrzeug.

### HINTERGRUND DER ERFINDUNG

Ein wesentliches Ziel bei der Einrichtung von Passagierkabinen in Verkehrsmitteln ist häufig die Maximierung der zur Verfügung stehenden Anzahl von Passagiersitzen, die durch die Anzahl von vorgeschriebenen Sitzen für Besatzungsmitglieder eingeschränkt wird, weiterhin durch vorgeschriebene Sicherheitseinrichtungen, beliebige Versorgungseinrichtungen und Toiletten. Das Verhältnis der Anzahl von Passagiersitzen zu übrigen Einrichtungen in Passagierkabinen ist ein Faktor, der die Wirtschaftlichkeit eines Flugzeugs im Linienverkehr mitbestimmt. Neben behördlichen Vorschriften für Muster- und Betriebszulassungen von Verkehrsmitteln sind bei Auswahl von Sitzgrößen, Sitzabständen, Versorgungseinrichtungen und Toiletten auch Kundenwünsche, beispielsweise kundenspezifische Sondereinbauten von Betreibern des Verkehrsmittels, mit einzubeziehen. Je nach Gestaltung von Einbauten in der Passagierkabine und deren Platzbedarf können intelligente Konstruktions- und Anordnungslösungen die Anzahl von Passagiersitzen optimieren.

Eine Möglichkeit zum Erhöhen der Anzahl von Passagiersitzen in einer räumlich begrenzenden Kabine könnte etwa dadurch realisiert werden, dass Behälter, bspw. Servierwagen (sogenannte "Trolleys") mit Speisen und Getränken oder anderen förderbaren Objekten nicht innerhalb der Kabine gelagert werden, sondern in einem dafür vorgesehenen Lagerraum außerhalb der Kabine. Beispielsweise zeigt DE 102 04 892 B4 eine Fördereinrichtung für den Vertikaltransport von Verpflegungsbehältnissen in Verkehrsflugzeugen, bei der solche Trolleys in einem Unterflur-Frachtraum gelagert werden und bei Bedarf in die Flugzeugkabine verfahren werden.

Andererseits ist auch eine Lösung bekannt, bei der einzelne Objekte, beispielsweise Speisen und Getränke, ohne den Trolley als Transportgefährt in einem abseits gelegenen Frachtraum außerhalb der Kabine gelagert und bei Bedarf wieder zur Verfügung gestellt werden. DE 43 02 706 C2 und US 5 496 000 A zeigen eine derartige Anordnung zur Handhabung von Speisen und Getränken an Bord eines Flugzeuges, bei der in Menüschachteln verpackte Speisen und Getränke in einem Frachtcontainer gelagert und zu der Kabine gefördert werden. Zum Entnehmen und Fördern der einzelnen Menüschachteln werden Lagerroboter eingesetzt.

US 6 152 287, die als nächsliegender Stand der Technik betrachtet wird, zeigt ein Flugzeug mit einem Handhabungssystem zum Handhaben von Objekten.

### ZUSAMMENFASSUNG DER ERFINDUNG

Gängige Lösungen aus dem Stand der Technik und insbesondere aus der Flugzeugtechnik sind zwar in der Lage, die Anzahl von Passagiersitzen in einem Fahrzeug zu steigern, jedoch erfolgt dies zwangsläufig mit der Belegung mindestens eines Containerstellplatzes im Frachtraum des betreffenden Fahrzeugs. Eine Erhöhung der Passagierkapazität des Fahrzeugs geht damit mit einer Senkung des möglichen Frachtvolumens bzw. der Anzahl an Containerstellplätzen einher.

Die Aufgabe der Erfindung ist demnach, eine Vorrichtung bzw. ein System zur Erhöhung der Passagierkapazität eines Fahrzeugs bei gleichzeitiger Beibehaltung eines größtmöglichen Frachtvolumens und bei gleichzeitig einfacher Handhabung vorzuschlagen.

Die Aufgabe der Erfindung wird gelöst durch die Merkmale der unabhängigen Ansprüche. Vorteilhafte Weiterbildungen sind den Unteransprüchen zu entnehmen.

Kern der Erfindung liegt in einem Handhabungssystem zum Handhaben von Objekten in einem Fahrzeug, aufweisend eine außerhalb einer Fahrzeugkabine positionierbare Lagervorrichtung zum Lagern von Objekten, eine in einer Fahrzeugkabine positionierbare Zugriffsvorrichtung zum Entnehmen oder Einsetzen von Objekten und eine Transportvorrichtung zum Transportieren von Objekten zwischen der Lagervorrichtung und der Zugriffsvorrichtung.

Erfindungsgemäß weist die Lagervorrichtung einen Lagerraum mit mindestens einem ebenen Gestell auf, wobei das Gestell mindestens eine mit der Transportvorrichtung verbindbare Anschlussstation besitzt und wobei das Gestell mindestens eine Antriebseinrichtung zum Bewegen von Trägern aufweist, auf denen die zu lagernden Objekte gehalten werden. Die Lagervorrichtung weist ferner mindestens eine Führungseinrichtung auf, die dazu eingerichtet ist, die Träger auf mindestens einem umlaufenden Weg innerhalb des Lagerraums zu führen.

Der besondere Vorteil einer derartigen Ausgestaltung einer Lagervorrichtung liegt darin, dass durch das umlaufende Bewegen der Träger eine verteilte Lagerung von Objekten auf einer ebenen Fläche ermöglicht wird und stets der Zugriff auf jedes einzelne Objekt gewährleistet ist. Durch diese Ausgestaltung kann der gesamte Lagerraum relativ flach ausgeführt werden, so dass er sich wiederum in einem ebenen Bereich direkt unterhalb oder direkt oberhalb einer Kabine anordnen lässt, ohne beispielsweise einen Containerstellplatz in einem Frachtraum des Fahrzeugs vollständig zu belegen.

Sollen die erfindungsgemäß zu handhabenden Objekte mit Hilfe von Trolleys transportiert werden, ist kein erhöhter Raumbedarf für bereits beladene Trolleys in der Fahrzeugkabine vorzusehen. Entsprechende Stellplätze für Trolleys, die sich etwa in einer Bordküche des Fahrzeugs befindet, können eingespart werden, was dazu führt, dass die Bordküche deutlich kleiner dimensioniert werden kann und sich über einen geringeren Bereich der Fahrzeugkabine erstreckt. Der eingesparte Raum kann für die Unterbringung von Passagiersitzen eingesetzt werden, um schließlich die Sitzplatzkapazität innerhalb der Fahrzeugkabine zu erhöhen.

Zur weiteren Verkleinerung der Bordküchen, sollten die Objekte Speisen und Getränke beinhalten, könnte es sich anbieten, die Trolleys zusammenfaltbar auszugestalten, so dass sie vor und nach Benutzung in einem besonders kleinen Stauraum verstaut werden können. Dies verringert zusätzlich den erforderlichen Bauraum für Stellplätze von Trolleys und dergleichen und erhöht zusätzlich die Anzahl der unterbringbaren Passagierplätze.

Durch Führen der Träger auf einem umlaufenden Weg, die eine Anschlussstation kreuzt, können sämtliche Träger selektiv an der Anschlussstation entladen oder beladen werden. Neben der einfachen Erreichbarkeit einzelner Träger ist auch praktisch eine beliebige flächenmäßige Gestaltung eines Lagerraums möglich, so dass beispielsweise ein sehr großer Flächenbereich unter- oder oberhalb einer Passagierkabine genutzt werden kann. Die vertikale, d.h. höhenmäßige Erstreckung des Lagerraums kann dadurch jedoch relativ gering gewählt werden, um eine beanspruchte Position innerhalb des Fahrzeugs möglichst gering zu beeinflussen. So könnte es beispielsweise in Flugzeugen ohne Weiteres möglich sein, einen derartigen Lagerraum unterhalb eines Kabinenfußbodens anzuordnen, ohne den für Frachtcontainer zur Verfügung gestellten Lagerraum einzuschränken, gleichermaßen könnte auch der Deckenbereich ("crown-area") mit einem derartigen Lagerraum versehen werden. Bevorzugt sollte ein Frachtraum mit einem darin enthaltenen Lagerraum für die zu handhabenden Objekte so wenig eingeschränkt werden, dass vollständige Frachtcontainer in den Frachtraum hineinpassen. Sollte dies aufgrund einer größeren vertikalen Erstreckung der zu handhabenden Objekte nicht realisierbar sein, könnte der direkt benachbarte Raum neben/unter/über dem Lagerraum auch zum Aufnehmen von Gepäck, Sperrgepäck oder allgemein größeren Gegenständen eingerichtet werden, die ohnehin in üblichen größeren Fahrzeugen unterbringbar sein sollten.

Der Begriff "Gestell" ist im weitesten Sinne als eine Einheit aufzufassen, die es ermöglicht, den Lagerraum strukturfest zu lagern und dessen Erstreckung vorzugeben. Das Gestell könnte dabei etwa als ein Rahmen, ein Gehäuse, Anbindungspunkte oder dergleichen ausgeführt sein, relativ zu dem sich die zu handhabenden Objekte bewegen.

Ein weiterer Vorteil des erfindungsgemäßen Handhabungssystem liegt darin, dass eine größere Kapazität an Objekten untergebracht und gehandhabt werden können, als dies in einem bislang üblicherweise zur Verfügung stehenden Kabinenraum möglich ist. Dies würde für die Betreiber des Fahrzeugs bezüglich Cateringzeit und Cateringkosten von Vorteil sein.

Weiterhin kann das erfindungsgemäße Handhabungssystem einen Rücktransport von Objekten realisieren, beispielsweise um Abfälle aus der Kabine entfernen und lagern zu können. So ist bislang üblich, in Verkehrsflugzeugen beispielsweise Abfälle in Abfallsäcke zu verstauen, die aufgrund des begrenzten Raumangebots teilweise in Toilettenräumen gelagert werden müssen.

Da nach wie vor - wenn auch ein sehr geringer - Teil an Objekten in der Kabine untergebracht sein kann, könnte eine Notfallversorgung von Passagieren gewährleistet werden.

Eine Zugriffsvorrichtung als Schnittstelle zwischen Lagervorrichtung und Fahrzeugkabine könnte bevorzugt so ausgelegt werden, dass Objekte auf verschiedenen vorgebbaren Positionen angehalten werden können, um die Objekte beispielsweise direkt in verschiedenen Schubfächern von Trolleys oder dergleichen schieben zu können, um ein Heben überflüssig zu machen.

Die zentrale Lagerung von Objekten in einer einzigen Lagervorrichtung kann weiterhin Zeit zum Befüllen des Fahrzeugs mit Objekten, bspw. Speisen und Getränken, einsparen, da Cateringfahrzeuge nur an einer einzigen Stelle ihre Waren ablegen müssen, anstatt - beispielsweise bei Verkehrsflugzeugen - mehrere Flugzeugtüren anfahren zu müssen, um dort befindliche Küchen zu beladen.

Schließlich ist die zentrale Kühlung von zu kühlenden Objekten ein besonderer Vorteil, da aufwändige Kühlvorrichtungen, Kühlmittelleitungen und dergleichen innerhalb der Fahrzeugkabine entfallen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt eine schematische Ansicht eines Handhabungssystems.
Fig. 2 zeigt eine schematische Ansicht einer Lagervorrichtung.
Fig. 3, 3a, 3b, 3c und 3d zeigen das erfmdungsgemäße Handhabungssystem in einem Heck eines Flugzeugs installiert.
Fig. 4 zeigt eine Zugriffsvorrichtung in einem seitlichen Schnitt.
Fig. 5 zeigt eine Detailansicht zweier Komponenten einer Führungseinrichtung des erfindungsgemäßen Handhabungssystems.
Fig. 6 zeigt eine Ausführungsform einer Führungseinrichtung des erfindungsgemäßen Handhabungssystems.
Fig. 7a und 7b zeigen Sicherheitsauflagen als Komponenten der Führungseinrichtung des erfindungsgemäßen Handhabungssystems.
Fig. 8 zeigt eine Ausführungsform einer Antriebseinrichtung der Lagervorrichtung in einer schematischen Ansicht.

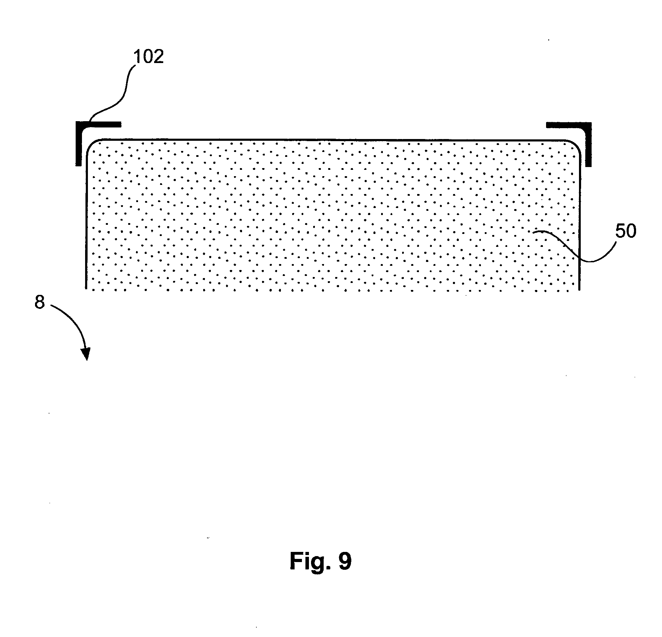

Fig. 9 zeigt ein Anschlagsmittel des erfindungsgemäßen Handhabungssystems in einem seitlichen Schnitt.
Fig. 10 zeigt ein erfindungsgemäßes Verfahren in einer Blockdarstellung.
Fig. 11 zeigt ein Flugzeug mit einem erfindungsgemäßen Handhabungssystem.

### DETAILLIERTE DARSTELLUNG EXEMPLARISCHER AUSFÜHRUNGSFORMEN

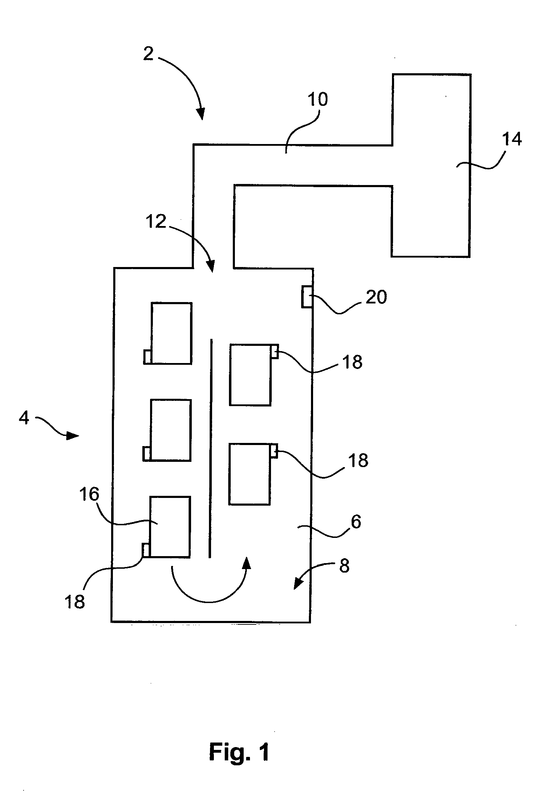

Das erfmdungsgemäße Handhabungssystem 2 weist gemäß Fig. 1 eine Lagervorrichtung 4 mit einem Lagerraum 6 und einem ebenen Gestell 8 auf, wobei das Gestell 8 eine mit einer Transportvorrichtung 10 verbundene Anschlussstation 12 aufweist, durch die eine Verbindung zwischen dem Lagerraum 6 und einer Zugriffsvorrichtung 14 geschaffen wird.

Die Besonderheit des erfindungsgemäßen Handhabungssystem 2 liegt darin, dass die Lagervorrichtung 4 dazu eingerichtet ist, Träger 16, die zum Tragen von zu lagernden und zu fördernden Objekten eingerichtet sind, auf mindestens einem umlaufenden Weg innerhalb des Lagerraums 6 zu bewegen. Der umlaufende Weg umschließt dabei eine Bewegung der Träger 16 an der Anschlussstation 12 vorbei, so dass die Transportvorrichtung 10 über die Anschlussstation 12 stets dazu in der Lage ist, eine Annäherung eines vorbestimmten Trägers 16 an der Anschlussstation 12 abzuwarten und das darauf befindliche Objekt zu der Zugriffsvorrichtung 14 zu fördern, den gesamten vorbestimmten Träger 16 zu der Transportvorrichtung 10 zu fordern, ein Objekt von der Zugriffsvorrichtung 14 zu einem vorbestimmten leeren oder nur unvollständig belegten vorbestimmten Träger 16 oder einen vorbestimmten Träger 16 zu dem Lagerraum 6 zu fördern.

Es versteht sich, zur besonderen Energieeffizienz an Bord des Fahrzeugs sowie zur Schonung von Ressourcen allgemein die Drehbewegung der Träger 16 in dem Lagerraum 6 nur dann durchzuführen, wenn ein Zugriff auf Objekte oder Träger 16 innerhalb des Lagerraums 6 stattfinden soll.

Bevorzugt sind die einzelnen Träger 16 mit einem Kennzeichnungsmittel 18 versehen, das durch ein Kennzeichnungserkennungsgerät 20 erkannt werden kann, wobei sich das Kennzeichnungserkennungsgerät 20 bevorzugt in einem benachbarten Bereich zu der Anschlussstation 12 befindet. Wird demnach ein vorbestimmter Träger 16, der ein individuelles Kennzeichnungsmittel 18 aufweist, gewünscht, könnte eine gemeinsame Bewegung aller Träger innerhalb des Lagerraums 6 initiiert werden. Das Kennzeichnungserkennungsgerät 20 würde dann eine Annäherung des vorbestimmten Trägers 16 an der Anschlussstation 12 erkennen, um dann ein gemeinsames Abbremsen der Träger 16 zu veranlassen, damit dann der vorbestimmte Träger 16 direkt an der Anschlussstation 12 positioniert ist. An dieser Stelle kann ein Zugriff auf den vorbestimmten Träger 16 oder das darauf befindliche Objekt erfolgen, indem etwa das Objekt entnommen und zur Zugriffsvorrichtung 14 transportiert wird oder ein von der Zugriffsvorrichtung 14 kommendes Objekt auf den vorbestimmten Träger 16 platziert wird.

Kennzeichnungsmittel 18 könnten beispielsweise durch RFID-Tags oder Barcode-Aufkleber realisiert werden, die durch Kennzeichnungserkennungsgeräte 20 in Form von RFID-Lesegeräten oder Barcode-Scannern gelesen werden können.

Der besondere Vorteil einer derartigen Lagervorrichtung 4 liegt darin, dass die mechanische Realisierung deutlich einfacher gestaltet ist, als die Verwendung eines Roboterarms oder dergleichen, der Objekte aus einem Regal herausnehmen oder wieder hineinsetzen muss. Ein derartiger Roboterarm muss unter allen Umständen, d.h. auch unter Vibrationen des Fahrzeugs während dessen normalen Betriebs auf exakte und reproduzierbare Weise dreidimensional beweglich sein. Ein umlaufendes Bewegen einzelner Träger 16 hingegen lässt sich sehr leicht realisieren und die Positioniergenauigkeit kann geringer als bei vorgenannten Roboterarmen sein. Weiterhin ist die resultierende Lagervorrichtung durch die im Wesentlichen ausschließlich ebene Bewegung im Vergleich zu Lagerregallösungen sehr flach und kann daher in boden- oder deckennahen Bereichen eines Fahrzeugs angeordnet werden, ohne einen dedizierten Lagerraum in einem Fahrzeug freihalten zu müssen.

Die Träger 16 können beliebiger Art sein, beispielsweise könnten palettenartige Träger verwendet werden, gestellartige Träger, die lediglich Aufnahmeflansche besitzen, kastenartige und einseitig geöffnete Elemente oder dergleichen.

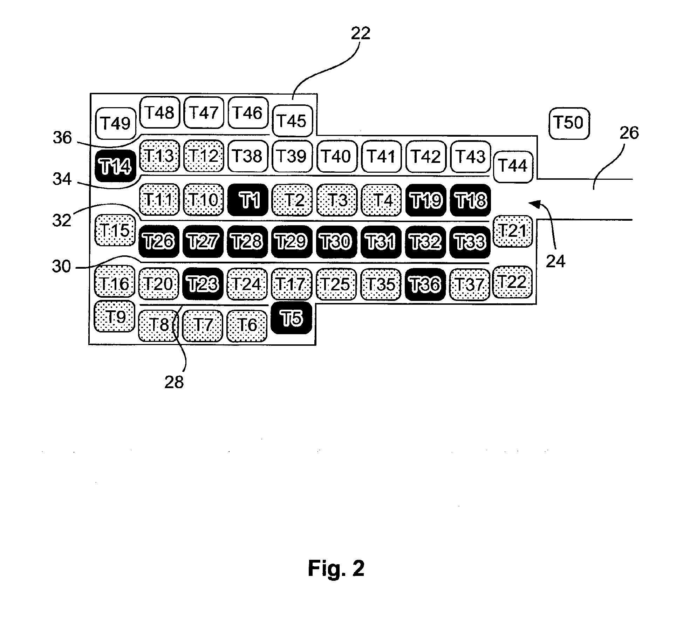

Zur besseren Ausnutzung einer zur Verfügung stehenden Fläche für einen Lagerraum sowie zur Beschleunigung der Zugriffsmöglichkeit auf einzelne Träger 16 könnte es vorteilhaft sein, in dem Lagerraum 6 mehrere umlaufende Wege vorzusehen, die parallel zueinander bzw. gleichzeitig von Trägern 16 durchlaufen werden können. Dies wird in Fig. 2 dargestellt.

Die Träger 16 müssen zur Richtungsumkehr nicht zwangsläufig um 180° gedreht werden. Vielmehr wäre es auch denkbar und sinnvoll, lediglich die Bewegungsbahn der Träger 16 umzulenken und deren Orientierung beizubehalten.

Fig. 2 zeigt eine Vielzahl von Trägern 16, die in einem Lagerraum 22 auf mehreren umlaufenden Wegen bewegt werden können. Die einzelnen umlaufenden Wege können durch Führungseinrichtungen und Antriebseinrichtungen (beide nicht in Fig. 2 gezeigt) realisiert werden.

Auch in der Fig. 2 ist zu sehen, dass eine Anschlussstation 24 mit einer Transportvorrichtung 26 kommuniziert und gleichzeitig dazu in der Lage ist, mit einem beliebigen Träger 16 in Kontakt zu geraten. Durch Ausführen der umlaufenden Bewegung in dem Lagerraum 22 können einzelne Träger zu der Anschlussstation 24 hin oder von der Anschlussstation 24 weg wandern. Durch eine gezielte Ansteuerung der Bewegung der einzelnen Träger 16 kann demnach ein vorbestimmter Träger zu der Anschlussstation 24 gelangen, indem er im Fluss der anderen Träger 16 zu der Anschlussstation 24 getragen wird.

Die besondere Darstellung aus Fig. 2 mit mehreren parallel zueinander angeordneten Führungswänden 28, 30, 32, 34 und 36 erlaubt die Überlappung bzw. Überschneidung mehrerer umlaufender Bahnen, was prinzipiell auch komplexere Bewegungsbahnen ermöglicht. So könnten einzelne Träger 16 um die Führungswand 36 herum eine umlaufende Bahn ausführen. Gleichzeitig kann um die Führungswand 34, die benachbart und parallel zu der Führungswand 36 angeordnet ist, ebenfalls eine umlaufende Bahn von Trägern 16 durchlaufen werden. Die Träger 16, die um die Führungswand 34 herum bewegt werden und gleichzeitig auch zu der Führungswand 36 benachbart sind, könnten dementsprechend durch abwechselndes Initiieren von umlaufenden Bewegungsbahnen um die Führungswand 36 und die Führungswand 34 herum in der Zeichnungsdarstellung eine Reihe nach unten "springen", um so bei kontinuierlicher umlaufender Bewegung um die Führungswand 34 herum schließlich relativ schnell zu der Anschlussstation 24 zu gelangen.

In der Fig. 2 sind die einzelnen Träger 16 mit Nummern T1-T50 versehen. Zur Veranschaulichung der Wechselwirkung der verschiedenen umlaufenden Bewegungen könnte im folgenden der Träger mit der Nummer T7 genauer betrachtet werden, der sich in der Zeichnung am unteren Ende der Führungswand 28 befindet. Durch eine im Uhrzeigersinn erfolgende umlaufende Bewegung kann der Träger T7 um die Führungswand 28 herum zu einer Position gelangen, in der momentan der Träger T16 positioniert ist, d.h. nun auf der oberen Seite der Führungswand 28 auf der linken Seite des Lagerraums 22. Sobald diese Position erreicht ist, könnte eine im Uhrzeigersinn verlaufende umlaufende Bewegung sämtlicher Träger 16 erfolgen, die benachbart zu der Führungswand 30 angeordnet sind. Dadurch könnte der Träger T7 zu der Stelle gelangen, in der momentan in der Zeichnung der Träger mit der Nummer T21 positioniert ist. Dies ist gleich benachbart zu der Anschlussstation 24, so dass ein Kennzeichnungserkennungsgerät 20 das Kennzeichnungsmittel 18 des Träger T7 erkennen und die Bewegung der Träger 16 in dem Lagerraum 22 abbremsen könnte, um eine Be- oder Entladung dieses Trägers T7 zu veranlassen.

Dies veranschaulicht, dass sowohl flächenmäßig ausgedehnte erfindungsgemäße Lagerräume 22 mit einer Vielzahl von Trägern 16 versehen werden können, die durch die umlaufende Bewegung sehr leicht vor eine Be- und Entladestation in Form der Anschlussstation 24 gefahren werden können.

Die Steuerung der Bewegung erfolgt bevorzugt über eine Recheneinheit, die mit einem Computerprogramm oder dergleichen ausgerüstet ist, welche auf die jeweiligen Bedürfnisse des entsprechenden Lagerraums 22 angepasst ist, so dass durch minimalen Bewegungsablauf jeder vorbestimmte Träger zu einer Anschlussstation 24 gebracht werden kann.

Das Computerprogramm enthält eine Anhaltefunktion für das gesamte System beim Auftreten von Turbulenzen einer bestimmten Größenordnung, bei denen eine sichere Handhabung nicht mehr gewährleistet ist. Zusätzlich hierzu könnte gleichzeitig eine Anweisung durchgegeben werden, sämtliche noch bewegbaren Trolleys an vorgegebenen Orten zu sichern.

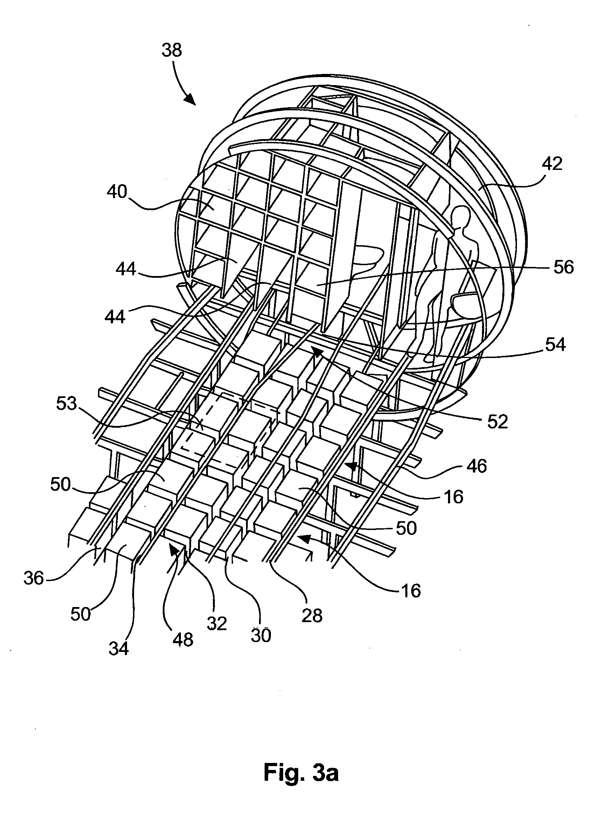

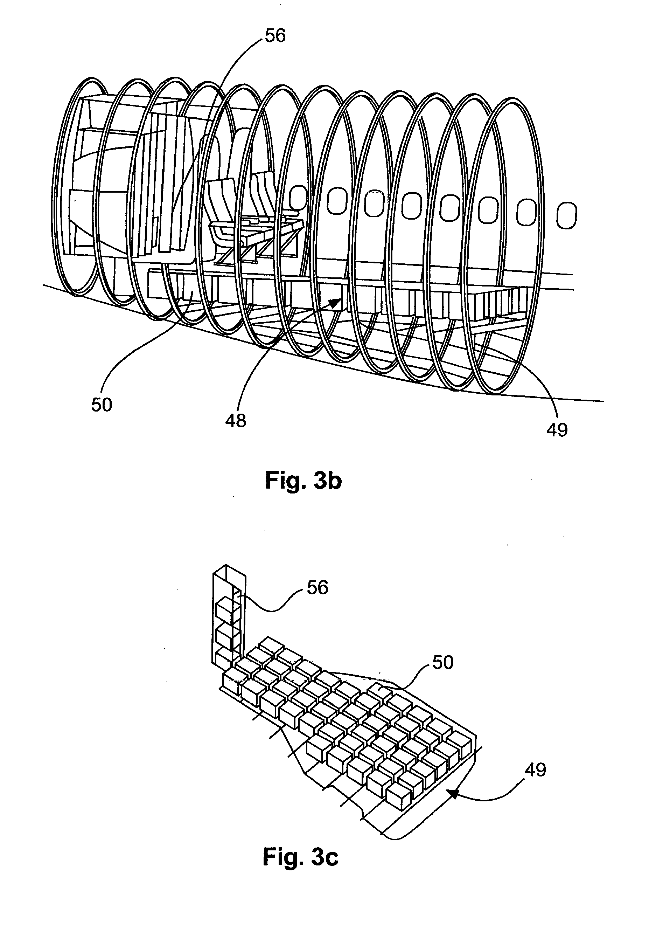

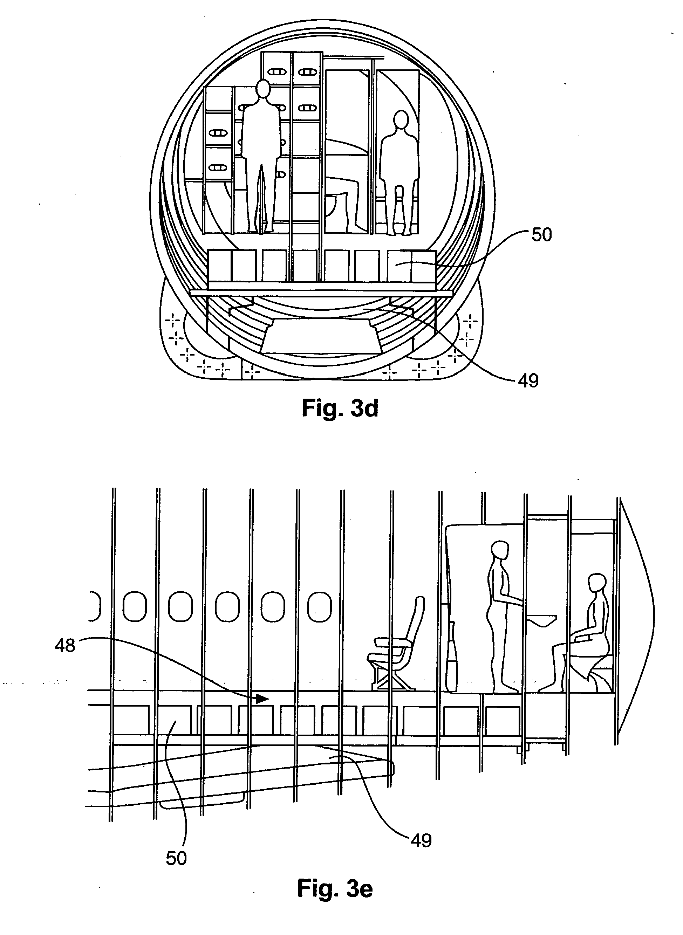

Durch den besonders flachen Aufbau eines Lagerraums und einer durch einen oder mehrere umlaufende Wege große erschließbare Lagerraumfläche eignet sich das erfindungsgemäße Handhabungssystem 2 besonders gut für den Einsatz in Fahrzeugen, wie in Fig. 3 anhand des Beispiels eines Verkehrsflugzeugs gezeigt wird.

In Fig. 3 und 3a-3d wird ein Heckbereich 38 eines Flugzeugs gezeigt, bei dem beispielhaft eine Flugzeugküche 40 unmittelbar vor einer Druckkalotte 42 angeordnet ist. Die Besonderheit dieser Flugzeugküche 40 liegt darin, dass hier lediglich zwei Stellplätze 44 vorhanden sind, in denen Trolleys untergestellt werden können. Es ist mit dem erfindungsgemäßen Handhabungssystem 2 nicht erforderlich, eine übermäßig große Anzahl von Trolleys in dem Flugzeug mitzuführen, die bereits bei der Anlieferung mit Speisen und Getränken beladen sind und in Stellplätzen auf ihren Einsatz warten. Vielmehr ist in Fig. 3 gezeigt, wie unter einem Kabinenfußboden 46 ein Lagerraum 48 mit Trägern 16 integriert sein könnte, die über eine Anschlussstation 52 in eine Transportvorrichtung 54 geraten und von dort durch eine Zugriffsvorrichtung 56 verfahren werden können. Aus der Zugriffsvorrichtung 56 können Objekte 50 entnommen werden, die auf den Trägern 16 angeordnet sind und in entsprechende Trolleys gesetzt werden.

Umfassen die Objekte 50 beispielsweise vorbereitete Catering-Service-Boxen mit Speisen und Getränken auf Tabletts, können diese aus der Zugriffsvorrichtung 56 in die Trolleys gebracht werden, dann den Passagieren serviert werden, um schließlich leere Catering-Service-Boxen mit Abfällen über die Zugriffsvorrichtung 56 wieder in den Lagerraum 48 zu schaffen. Dadurch erübrigen sich großzügige Lagerräume in der Flugzeugküche 40 sowie die Notwendigkeit einer Vielzahl von vorzuhaltenden Trolleys, so dass der üblicherweise für eine Flugzeugküche verwendete Bauraum mit Passagiersitzen ausgerüstet werden kann. Dadurch kann die Sitzplatzkapazität im Flugzeug gesteigert werden, wobei durch die sehr flache Gestaltung des Lagerraums 48 keine übermäßige Einschränkung von Containerstellplätzen im Frachtraum erfolgt oder alternativ einen stets ausreichend dimensionierten Frachtraum 49 zum Unterbringen von Gepäck, Sperrgepäck oder loser Fracht erlaubt.

Das Beispiel aus Fig. 3 und 3a-3d zeigt einen Lagerraum 48, der ähnlich wie der Lagerraum in Fig. 2 ausgestaltet ist. Bedingt durch die Breite größerer Verkehrsflugzeuge wäre es denkbar, auch breitere Lagerräume einzusetzen, in denen noch weitere Führungswände vorhanden sind, die eine noch größere Anzahl von umlaufenden Bewegungen erlauben.

Um versehentlich festgeklemmte oder festgefahrene Objekte 50 zu lösen, könnte eine beispielhaft im Kabinenfußboden 46 angeordnete Zugriffsklappe 53 in der Kabine des Fahrzeugs integriert werden, durch die direkt auf den Lagerraum 48 zugegriffen werden könnte.

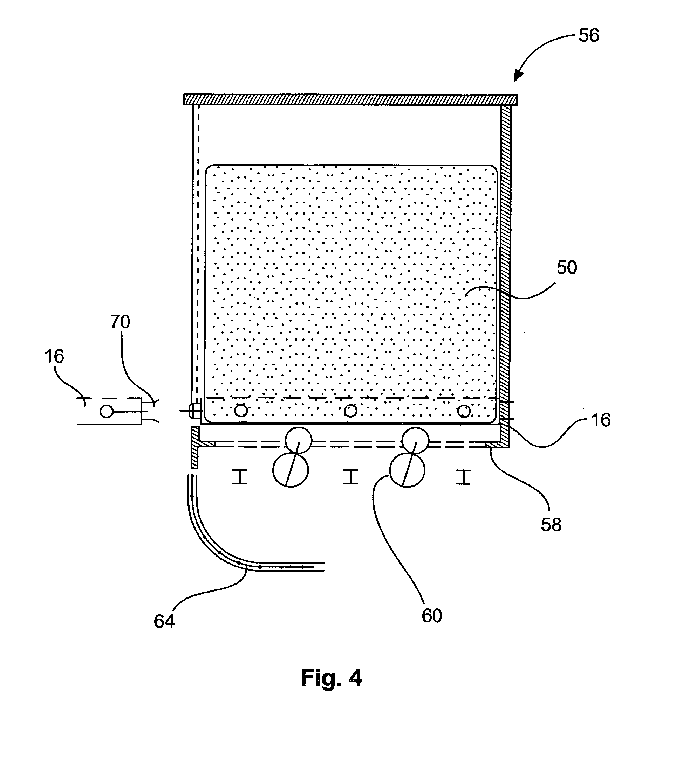

Die in Fig. 3 und 3a-3d ersichtliche Transportvorrichtung 54 ist als vertikale Transportvorrichtung ausgeführt. Eine sich daran anschließende Zugriffsvorrichtung 56 könnte nach Art einer Aufzug- bzw. Liftöffnung ausgeführt werden, wie schematisch in Fig. 4 erkennbar ist.

Die Zugriffsvorrichtung 56 könnte beispielsweise ein Tragegestell 58 besitzen, an dem eine Fördereinrichtung 60 angeordnet ist. Das Tragegestell 58 könnte bei der Be- und Entladung mit Objekten 50 beispielsweise mit der Anschlussstation 52 des Lagerraums 48 in Fluchtung gebracht werden, so dass ein Objekt 50 von einem Träger 16 entnommen und auf das Tragegestell 58 verfahren werden könnte, beispielsweise mit Hilfe der Fördereinrichtung 60. Alternativ dazu wäre es auch möglich, den kompletten Träger 16 inklusive des darauf befindlichen Objekts 50 auf das Tragegestell zu verfahren. In Fig. 4 ist der letztere Fall dargestellt, was bedeutet, dass der vollständige Träger 16 auf dem Tragegestell 58 aufliegt und über die Zugriffsvorrichtung 56 über den Kabinenfußboden 46 des Flugzeugs gebracht und dort entladen werden. Die Entladung sieht vor, mittels der exemplarischen Fördereinrichtung 60 oder manuell den Träger 16 aus der Zugriffsvorrichtung 56 zu entnehmen und beispielsweise direkt in einen vor der Zugriffsvorrichtung bereitgestellten Trolley einzusetzen.

In der exemplarischen Darstellung aus den Figuren 3 und 4 ist die Transportvorrichtung 52 als vertikale Transportvorrichtung ausgeführt, an die sich die Zugriffsvorrichtung 56 ebenfalls vertikal anschließt. Um den dafür erforderlichen Schacht zum Lagerraum 48 zu schützen, so dass dort keine Objekte hineinfallen können, wie etwa Abfälle, Kleinteile und dergleichen, ist dort ein Verschluss 64 angeordnet, der beispielsweise ähnlich wie ein Rollladen den Schacht vollständig verschließt. Vor Bewegung der Zugriffsvorrichtung 56 wird dieser Verschluss 64 wieder geöffnet und das Tragegestell 58 kann in Richtung des Lagerraums 48 verfahren werden.

In den Seitenwänden der vertikalen Transportvorrichtung 52 befinden sich vertikale Führungsprofile zur Aufnahme der Lagerrollen 68 zur sicheren Auf- und Abwärtsbewegung der Träger 16.

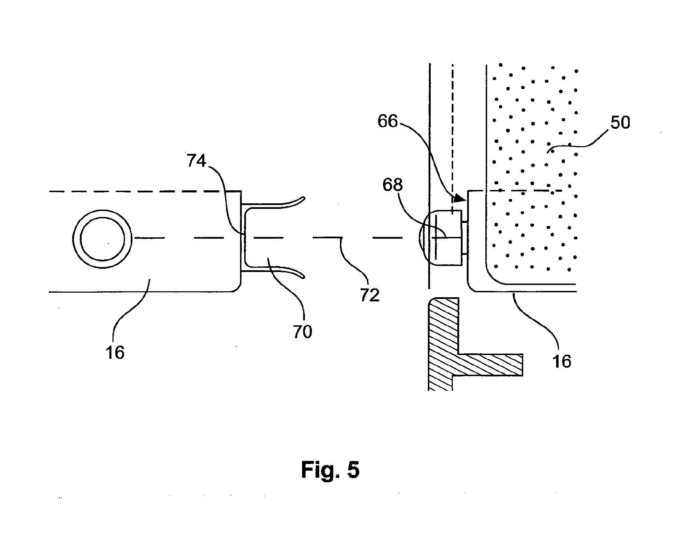

Die Führung der einzelnen Träger 16 innerhalb des erfindungsgemäßen Handhabungssystems 2 kann auf vielfältige Weise erreicht werden. Mechanisch einfache, robuste und vor allen Dingen zuverlässige Führungseinrichtungen sind selbstverständlich zu bevorzugen, da dies deutlich die Betriebssicherheit erhöht und die Gefahr minimiert, dass im Bereich der erfindungsgemäßen Lagervorrichtung ein Träger 16 plötzlich feststeckt und manuell gelöst werden muss oder andere unvorhergesehene und ungewollte Ereignisse eintreten. Eine mechanisch besonders einfache, aber auch sehr robuste und damit zuverlässige Führungseinrichtung wird in Fig. 5 gezeigt.

Fig. 5 zeigt einen kleinen Ausschnitt eines Trägers 16, der mit einem Objekt 50 beladen ist. An einer Außenseite 66 des Trägers sind Lagerrollen 68 angeordnet, die korrespondierend zu einer Führungsnut 70 geformt sind. Die Führungsnut 70 ist in Fig. 5 im Profilschnitt dargestellt und könnte sich über eine gewünschte Länge erstrecken und dabei gerade bzw. linear oder abschnittsweise gebogen verlaufen. Durch eine solche Führungsnut 70 wird der Träger 16 aufgrund des bündigen Eingreifens der Lagerrollen 68 entlang einer vorgegebenen Bahn geführt, so dass der Antrieb der Träger 16 mechanisch ebenfalls relativ einfach ausgeführt werden kann. Die Antriebseinrichtung muss nicht zwangsläufig dazu angepasst sein, den angetriebenen Träger 16 auf einer vordefinierten Bahn mit der gewünschten Präzision zu bewegen.

In dem gezeigten Beispiel ist die Führungsnut 70 mit einem solchen Profil ausgestattet, das sich von einer Mittel- bzw. Symmetrieachse 72 nach außen erstreckt, so dass das einer Basis 74 entgegengesetzte Ende der Führungsnut 70 breiter ist als die Basis 74. Dadurch weist die Führungsnut 70 einen Trichtereffekt auf, der auch relativ ungenau positionierte Lagerrollen 68 aufzunehmen vermag, um sie bei vollständiger Aufnahme ordnungsgemäß auf der vorgegebenen Bahn zu führen. Dieser Effekt könnte dadurch verstärkt werden, dass die Lagerrollen 68 eine angepasste Kontur aufweisen, die sich vom Träger 16 aus gesehen nach außen verschmälern.

Wie in Fig. 5 deutlich wird, kann die Führungsnut 70 an einem Träger 16 angeordnet sein, so dass sich beispielsweise zueinander benachbarte Träger 16 untereinander selbst führen könnten. Der positive Nebeneffekt darin liegt, dass hintereinander laufende Träger 16 keinen individuellen Antrieb benötigen, sondern dass ein Träger 16 einen oder mehrere nachgeordnete Träger 16 "anschiebt".

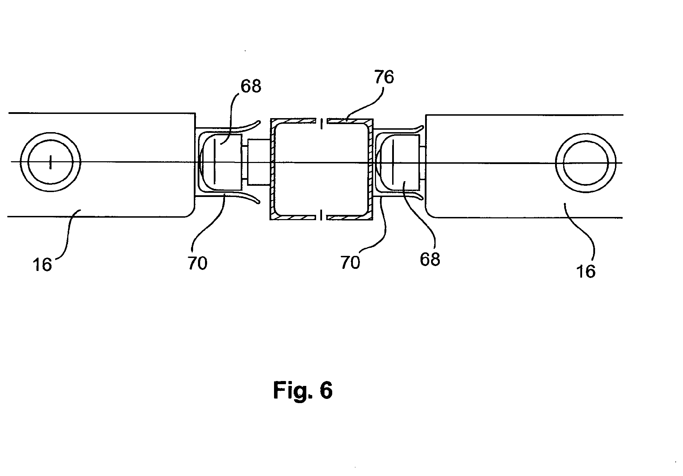

In Fig. 6 wird hiervon abweichend dargestellt, dass eine Führungsnut 70 auch an einem Strukturbauteil 76 angeordnet sein könnte, um die Lagerrollen 68 und damit Träger 16 auf einer fest vorgegebenen Bahn zu führen. Gleichzeitig, um die Kompatibilität zu wahren, könnte das gleiche Strukturbauteil 76 auf einer der Führungsnut 70 gegenüberliegenden Seite auch einen Vorsprung 68 aufweisen, mit dem eine Führung eines Trägers 16 erfolgen könnte, an dem eine Führungsnut 70 angebracht ist. Das Strukturbauteil 76 könnte als eine der Führungswände 28, 30, 32, 34 oder 36 aus Fig. 2 ausgeführt sein. Diese erstrecken sich nicht vollständig über den gesamten Lagerraum 22, so dass in dem Lagerraum 22 Bereiche vorliegen, in denen sich zwei Träger 16 selbst relativ zueinander führen könnten.

In Bereichen, in denen eine Richtungsumkehr innerhalb des Lagerraums vollzogen werden muss, kann es mitunter vorkommen, dass an bestimmten Stellen eine ausreichende Stützung von einer strukturfesten Stelle unterhalb der Träger 16 nicht gewährleistet werden kann. Dies kann dann passieren, wenn mehrere Antriebseinrichtungen in mehreren Reihen zueinander angeordnet sind, beim Wechsel von einer Reihe in eine nächste Reihe jedoch zumindest an diagonal durchfahrenen Stellen keine ausreichende Stützung durch die Antriebseinrichtungen fehlen und ein Träger eine Kippbewegung durchführen könnte. Hierdurch würde die Gefahr bestehen, dass das auf dem Träger 16 befindliche Objekt abfällt oder der Träger 16 sich verkantet.

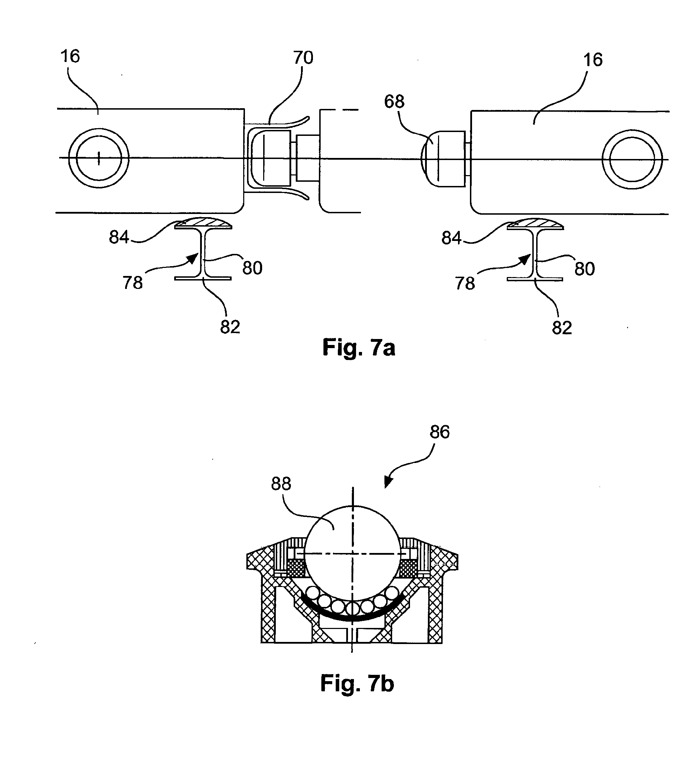

In den Fig. 7a und 7b werden longitudinale Sicherheitsauflagen im Bereich von Weichen vorgeschlagen. Die Sicherheitsauflagen 78 könnte beispielsweise ein Strukturbauteil 80 umfassen, welches mit einer Basis 82 strukturfest befestigt ist und an einem gegenüberliegenden Ende zur Basis 82 ein Auflageprofil 84 bereitgestellt wird, auf der ein Träger 16 aufliegen kann. Eine einfache Bauart einer derartigen Sicherheitsauflage 78 könnte beispielsweise ein Auflageprofil aus Teflon oder einem anderen, ähnlich geeigneten Material umfassen. Gleichermaßen könnte sich die in Fig. 7b gezeigte Kugelauflage 86 anbieten, bei der eine Kugel 88 verschleißfrei gelagert ist und auch relativ schwere Träger 16 stützen könnte.

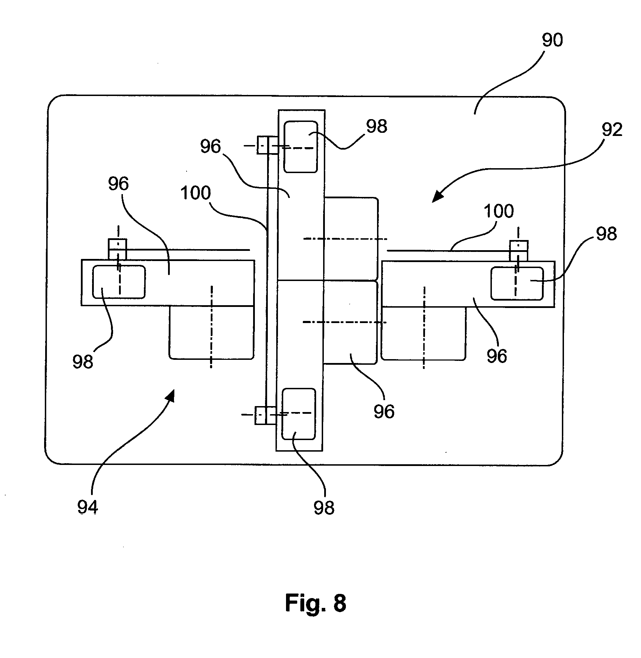

Fig. 8 zeigt eine Antriebseinrichtung 90, die eine laterale Antriebseinheit 92 und eine longitudinale Antriebseinheit 94 umfasst. Sowohl die laterale Antriebseinheit 92 als auch die longitudinale Antriebseinheit 94 umfasst zwei Motoreinheiten 96, bei denen jeweils ein Reibrad 98 angetrieben wird. Bei der lateralen Antriebseinrichtung 92 werden die Drehbewegungen der beiden Reibräder 98 über ein linienförmiges Bewegungselement 100 synchronisiert, ebenso bei der longitudinalen Antriebseinrichtung 94. Die laterale und longitudinale Antriebseinrichtung 92 und 94 werden unabhängig voneinander angesteuert und werden bevorzugt getrennt voneinander betrieben. Die Reibräder 100 könnten bevorzugt bei Bedarf zu den zu transportierenden Trägern 16 geklappt oder ausgeschwenkt werden und beim Ausschaltvorgang wieder zurückgeklappt oder zurückgeschwenkt werden. Im Bereich einer Weiche mit einer Richtungsänderung eines umlaufenden Wegs, könnte beispielsweise ein Träger auf longitudinalem Wege bis zur Antriebseinrichtung 90 gelangen, wonach die longitudinale Antriebseinheit 94 abgestellt wird und danach die laterale Antriebseinheit 92 in Betrieb genommen wird. Das heißt, der betreffende Träger würde erst eine seitliche und dann eine vertikale Bewegung durchführen, so dass zunächst die longitudinale Antriebseinheit 90 zu dem Träger 16 geschwenkt und in Reibung gebracht werden könnte, anschließend die laterale Antriebseinheit 92.

Die Bewegung der Träger 16 hängt maßgeblich von der Ausgestaltung der Antriebseinrichtungen ab, so dass eine Vielzahl von Antriebseinrichtungen 90 in einem erfindungsgemäßen Lagersystem angeordnet sein müsste. Es ist nicht erforderlich, an jeder denkbaren Stelle, über die sich ein Träger 16 bewegt, auch eine Antriebseinrichtung 90 vorzusehen. Jedoch ist darauf zu achten, dass insbesondere an den Stellen, an denen die Träger eine Richtungsumkehr durchführen müssen, Antriebseinrichtungen positioniert sind. Gleichzeitig sollte bevorzugt gewährleistet werden, dass stets ein Träger 16 vollen Kontakt zu zwei Reibrädern 98 besitzt, da sonst eine Kette von hintereinander angeordneten und sich gegenseitig anschiebenden Trägern 16 plötzlich stehen bleiben könnte.

Um zu verhindern, dass die Objekte 50 im Falle von übermäßigen Turbulenzen, Relativbewegungen, Schwingungen oder dergleichen des Fahrzeugs von den jeweiligen Trägern 16 abheben, sind bevorzugt oberhalb des Gestells 8 Fangprofile 102 angeordnet, die etwa aus Profilstäben bestehen, welche ein L-Profil aufweisen und derart positioniert sind, dass die äußeren Kanten der jeweiligen Objekte 50 mit den Fangprofilen 102 in Eingriff geraten können, jedoch nicht verklemmen und feststecken.

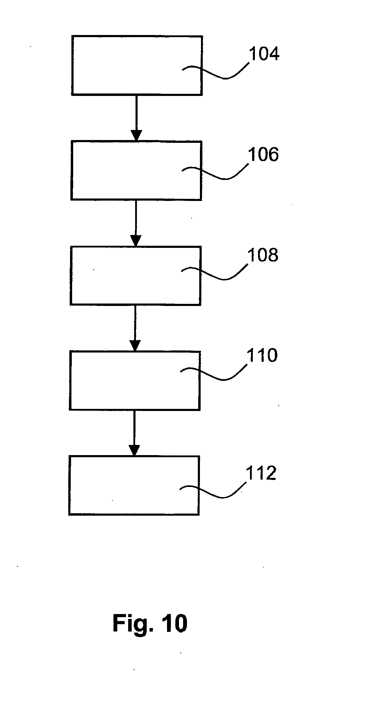

In Fig. 10 wird das erfindungsgemäße Verfahren in einer schematischen Blockdarstellung gezeigt.

Das erfindungsgemäße Verfahren zum Handhaben von Objekten in einem Fahrzeug weist unter anderem den Schritt des Initiierens 104 einer Bewegung von Trägern in einem Lagerraum einer Lagervorrichtung auf einem ersten umlaufenden Weg auf. Dies kann etwa dadurch erfolgen, dass in der Kabine des betreffenden Fahrzeugs Objekte aus der Lagervorrichtung entnommen und auf Trolleys oder dergleichen geladen werden. Es wird auf einen Träger an einer Anschlussstation in dem Lagerraum zugegriffen 106 und dieser Träger wird be- oder entladen 108. Dies geschieht durch Fördern eines auf dem Träger befindlichen Objekts oder des gesamten Trägers mit Hilfe einer Transportvorrichtung zwischen der Lagervorrichtung und einer Zugriffsvorrichtung. Vor und nach Entnehmen oder Einsetzen eines Objekts in die Zugriffsvorrichtung wird eine Verschlusseinrichtung zwischen der Transportvorrichtung und der Zugriffsvorrichtung betätigt 110, um den Zugang zu der Lagervorrichtung vor unbeabsichtigter Einwirkung durch Fremdkörper oder dergleichen zu schützen.

Das erfindungsgemäße Verfahren könnte ferner das Lesen von Kennzeichnungsmitteln umfassen sowie das Anhalten 112 der Lagervorrichtung, etwa im Falle von starken Bewegungen des Fahrzeugs, bei Erreichen einer Endposition durch einen vorbestimmten Träger mit einem zu handhabenden Objekt oder bei Beendigung eines Handhabungsvorgangs.

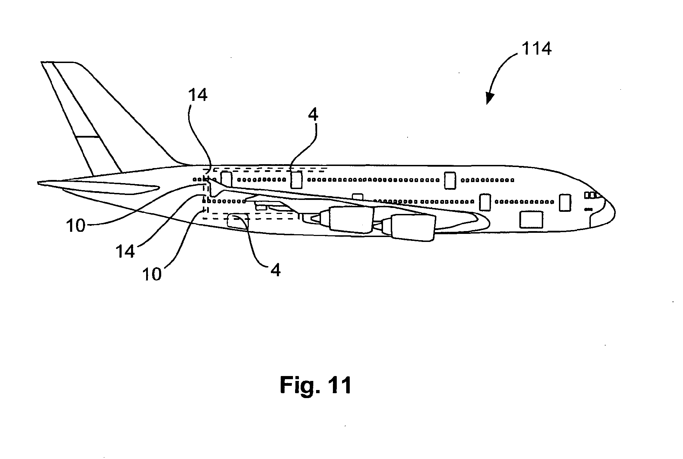

Schließlich zeigt Fig. 11 ein Flugzeug 114, das mit einem erfindungsgemäßen Handhabungssystem ausgestattet ist, mehrere Zugriffsvorrichtungen 14 und eine oberhalb eines Frachtraums angeordnete Lagervorrichtung 4 aufweist. Alternativ oder zusätzlich kann die Lagervorrichtung 4 auch oberhalb der Passagierkabine angeordnet werden.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Handhabungssystem (2) zum Handhaben von Objekten (50) in einem Fahrzeug, aufweisend
- eine außerhalb einer Fahrzeugkabine positionierbare Lagervorrichtung (4) zum Lagern von Objekten (50);
- eine in einer Fahrzeugkabine positionierbare Zugriffsvorrichtung (14) zum Entnehmen oder Einsetzen von Objekten (50); und
- eine Transportvorrichtung (10, 26, 52, 54) zum Transportieren von Objekten zwischen der Lagervorrichtung (4) und der Zugriffsvorrichtung (14);
wobei
- die Lagervorrichtung (4) einen ebenen und in vertikaler Richtung direkt an die Fahrzeugkabine anschließend positionierbaren Lagerraum (6, 22) mit mindestens einer mit der Transportvorrichtung (10, 26) verbindbaren Anschlussstation (12, 24) und mindestens eine Antriebseinrichtung (90) zum Bewegen von Trägern (16) aufweist, auf denen zu lagernde Objekte (50) gehalten werden und
- das Handhabungssystem (2) mindestens eine Führungseinrichtung (28, 30, 32, 34, 36, 68, 70) aufweist, die mit der Antriebseinrichtung (90) zusammen dazu eingerichtet ist, die Träger (16) auf mehreren nebeneinander und überlappend verlaufenden ebenen umlaufenden Wegen innerhalb des Lagerraums (6) zu führen.

2. Handhabungssystem (2) nach Anspruch 1,
**dadurch gekennzeichnet, dass** der Lagerraum mindestens eine Führungswand (28, 30, 32, 34, 36) zum Definieren eines umlaufenden Wegs aufweist.

3. Handhabungssystem (2) nach einem Anspruch 1 oder 2,
**dadurch gekennzeichnet, dass** zwischen der Zugriffsvorrichtung (14, 56) und der Transportvorrichtung (10, 26, 52, 54) ein Verschlussmittel (64) angeordnet ist, das dazu eingerichtet ist, nach dem Handhaben eines Objekts (50) verschlossen zu werden.

4. Verfahren zum Handhaben von Objekten (50) in einem Fahrzeug, aufweisend die in beliebiger Reihenfolge durchführbaren Schritte:
- Initiieren einer Bewegung von Trägern (16) in einem Lagerraum (6, 22) einer Lagervorrichtung (4) auf mehreren nebeneinander und überlappend verlaufenden ebenen umlaufenden Wegen;
- Zugreifen auf einen Träger (16) an einer Anschlussstation (12, 24) in dem Lagerraum (6, 22); und
- Be- oder Entladen des Trägers (16) durch Fördern eines auf dem Träger befindlichen Objekts (50) oder des gesamten Trägers (16) mit Hilfe einer Transportvorrichtung 10, 26, 52, 54) zwischen der der Lagervorrichtung (4) und einer Zugriffsvorrichtung (14).

5. Verfahren nach Anspruch 4, ferner aufweisend:
- Betätigen einer Verschlusseinrichtung (64) zwischen der Transportvorrichtung (10, 26, 52, 54) und der Zugriffsvorrichtung (14, 56).

6. Flugzeug mit mindestens einer Kabine und mindestens einem Handhabungssystem (2) zum Handhaben von Objekten (50), aufweisend
- eine außerhalb der Kabine positionierte Lagervorrichtung zum Lagern von Objekten;
- eine in der Kabine positionierte Zugriffsvorrichtung zum Entnehmen oder Einsetzen von Objekten; und
- eine Transportvorrichtung zum Transportieren von Objekten zwischen der Lagervorrichtung und der Zugriffsvorrichtung;
wobei
- die Lagervorrichtung einen ebenen und in vertikaler Richtung direkt an die Kabine anschließend angeordneten Lagerraum (48) mindestens eine mit der Transportvorrichtung verbindbaren Anschlussstation (52) und mindestens eine Antriebseinrichtung zum Bewegen von Trägern (16) aufweist, auf denen zu lagernde Objekte (50) gehalten werden und
- das Handhabungssystem (2) mindestens eine Führungseinrichtung (28, 30, 32, 34, 36, 68, 70) aufweist, die dazu eingerichtet ist, die Träger auf mehreren nebeneinander und überlappend verlaufenden umlaufenden Wegen innerhalb des Lagerraums (48) zu führen und
- die Transportvorrichtung mindestens eine vertikale Transporteinheit umfasst, die sich in die Kabine erstreckt.

7. Flugzeug nach Anspruch 6,
**dadurch gekennzeichnet, dass** der Lagerraum (48) unterhalb eines Kabinenfußbodens (46) angeordnet ist.

8. Flugzeug nach Anspruch 7,
**dadurch gekennzeichnet, dass** unter dem Lagerraum (48) ein Frachtraum für Gepäck, Sperrgepäck oder lose Fracht angeordnet ist.

9. Flugzeug nach Anspruch 6,
**dadurch gekennzeichnet, dass** der Lagerraum oberhalb einer Kabinendecke angeordnet ist.

10. Flugzeug nach einem der Ansprüche 6 bis 9,
**dadurch gekennzeichnet, dass** in der Kabine mindestens eine Zugriffsklappe (53) zum unabhängigen Zugreifen auf den Lagerraum integriert ist.

## Claims

1. A handling system (2) for handling objects (50) in a vehicle, comprising
- a storage apparatus (4), which is positionable outside a vehicle cabin, for storing objects (50);
- an access device (14), which is positionable in a vehicle cabin, for removing or inserting objects (50); and
- a transport device (10, 26, 52, 54) for transporting objects between the storage apparatus (4) and the access device (14);
wherein
- the storage apparatus (4) comprises a storage space (6, 22) which is flat and positionable directly adjacent to the vehicle cabin in a vertical direction, with at least one connection station (12, 24) that is connectable to the transport device (10, 26), and at least one drive device (90) for moving carriers (16) on which objects (50) to be stored are held; and
- the handling system (2) comprises at least one guiding device (28, 30, 32, 34, 36, 68, 70) that together with the drive device (90) is designed to guide the carriers (16) on a plurality of adjacent and overlapping planar circular paths within the storage space (6).

2. The handling system (2) of claim 1,
**characterized in that** the storage space comprises at least one guide wall (28, 30, 32, 34, 36) for defining a circular path.

3. The handling system (2) of claim 1 or 2,
**characterized in that** between the access device (14, 56) and the transport device (10, 26, 52, 54) a closing means (64) is arranged that is designed to be closed after an object (50) has been handled.

4. A method for handling objects (50) in a vehicle, comprising the following steps implementable in any order:
- initiating a movement of carriers (16) in a storage space (6, 22) of a storage apparatus (4) on a plurality of planar adjacent and overlapping circular paths;
- accessing a carrier (16) on a connection station (12, 24) in the storage space (6, 22); and
- loading or unloading the carrier (16) by conveying an object (50) situated on the carrier (16), or by conveying the entire carrier (16) by means of a transport device (10, 26, 52, 54) between the storage apparatus (4) and an access device (14).

5. The method of claim 4, further comprising:
- activating a closing device (64) between the transport device (10, 26, 52, 54) and the access device (14, 56).

6. An aircraft with at least one cabin and at least one handling system (2) for handling objects (50), comprising
- a storage apparatus, positioned outside the cabin, for storing objects;
- an access device, positioned in the cabin, for removing or inserting objects; and
- a transport device for transporting objects between the storage apparatus and the access device;
wherein
- the storage apparatus (4) comprises a storage space (6, 22) which is flat and positionable directly adjacent to the vehicle cabin in a vertical direction, with at least one connection station (12, 24) that is connectable to the transport device (10, 26), and at least one drive device (90) for moving carriers (16) on which objects (50) to be stored are held; and
- the handling system (2) comprises at least one guiding device (28, 30, 32, 34, 36, 68, 70) that together with the drive device (90) is designed to guide the carriers (16) on a plurality of adjacent and overlapping planar circular paths within the storage space (6).

7. The aircraft of claim 6,
**characterized in that** the storage space (48) is arranged underneath a cabin floor (46).

8. The aircraft of claim 7,
**characterized in that** underneath the storage space (48) a cargo hold for baggage, oversize baggage or loose cargo is arranged.

9. The aircraft of claim 6,
**characterized in that** the storage space is arranged above a cabin ceiling.

10. The aircraft of any one of claims 6 to 9,
**characterized in that** at least one access flap (53) for independent access to the storage space is arranged in the cabin.

## Revendications

1. Système de manipulation pour manipuler des objets (50) dans un véhicule, présentant :
- un dispositif de stockage (4) positionnable à l'extérieur d'une cabine de véhicule pour stocker des objets (50) ;
- un dispositif d'accès (14) positionnable à l'intérieur d'une cabine de véhicule pour retirer ou insérer des objets (50) ; et
- un dispositif de transport (10, 26, 52, 54) pour transporter des objets entre le dispositif de stockage (4) et le dispositif d'accès (14);
dans lequel
le dispositif de stockage (4) présente un espace de stockage (6, 22) plan et positionnable raccordé directement en direction verticale à la cabine de véhicule comportant au moins une station de raccordement (12, 24) pouvant être connectée avec le dispositif de transport (10, 26) et au moins un dispositif d'entraînement (90) pour déplacer des supports (16) sur lesquels des objets (50) devant être stockés sont maintenus et
le système de manipulation (2) présente au moins un dispositif de guidage (28, 30, 32, 34, 36, 68, 70) qui, conjointement avec le dispositif d'entraînement (90), est agencé pour guider les supports (16) sur plusieurs trajets périphériques plans se dirigeant de manière adjacente et se chevauchant à l'intérieur de l'espace de stockage (6).

2. Système de manipulation (2) selon la revendication 1, **caractérisé par le fait que** l'espace de stockage présente au moins une paroi de guidage (28, 30, 32, 34, 36) pour définir un trajet périphérique.

3. Système de manipulation (2) selon la revendication 1 ou 2, **caractérisé par le fait qu'**un moyen de fermeture (64), qui est agencé pour être fermé après la manipulation d'un objet (50), est disposé entre le dispositif d'accès (14, 56) et le dispositif de transport (10, 26, 52, 54).

4. Procédé de manipulation d'objets (50) dans un véhicule, présentant les étapes réalisables dans n'importe quel ordre :
- lancement d'un mouvement de supports (16) dans un espace de stockage (6, 22) d'un dispositif de stockage (4) sur plusieurs trajets périphériques plans se dirigeant de manière adjacente et se chevauchant;
- accès à un support (16) au niveau d'une station de raccordement (12, 24) dans l'espace de stockage (6, 22) ; et
- chargement ou déchargement du support (16) en transportant un objet (50) se trouvant sur le support ou la totalité du support (16) à l'aide d'un dispositif de transport (10, 26, 52, 54) entre le dispositif de stockage (4) et un dispositif d'accès (14).

5. Procédé selon la revendication 4, présentant en outre :
- l'actionnement d'un dispositif de fermeture (64) entre le dispositif de transport (10, 26, 52, 54) et le dispositif d'accès (14, 56).

6. Aéronef avec au moins une cabine et au moins un système de manipulation (2) pour manipuler des objets (50), présentant :
- un dispositif de stockage positionné à l'éxtérieur de la cabine pour stocker des objets ;
- un dispositif d'accès positionné à l'intérieur de la cabine pour retirer ou insérer des objets ; et
- un dispositif de transport pour transporter des objets entre le dispositif de stockage et le dispositif d'accès ;
dans lequel
le dispositif de stockage présente un espace de stockage (48) plan et disposé raccordé directement en direction verticale à la cabine avec au moins une station de raccordement (52) pouvant être connectée avec le dispositif de transport et au moins un dispositif d'entraînement pour déplacer des supports (16) sur lesquels des objets (50) devant être stockés sont maintenus et
le système de manipulation (2) présente au moins un dispositif de guidage (28, 30, 32, 34, 36, 68, 70) qui est agencé pour guider les supports sur plusieurs trajets périphériques se dirigeant de manière adjacente et se chevauchant à l'intérieur de l'espace de stockage (48) et le dispositif de transport comprend au moins une unité de transport verticale qui s'étend dans la cabine.

7. Aéronef selon la revendication 6, **caractérisé par le fait que** l'espace de stockage (48) est disposé sous un plancher de cabine (46).

8. Aéronef selon la revendication 7, **caractérisé par le fait qu'**un espace de fret pour les bagages, les bagages encombrants et le fret en vrac est disposé sous l'espace de stockage (48).

9. Aéronef selon la revendication 6, **caractérisé par le fait que** l'espace de stockage est disposé au-dessus d'un plafond de cabine.

10. Aéronef selon l'une des revendications 6 à 9, **caractérisé par le fait qu'**au moins une trappe d'accès (53) est intégrée dans la cabine pour l'accès indépendant à l'espace de stockage.
